# EUROPEAN PATENT APPLICATION

(11) **EP 4 686 523 A1**
(43) Date of publication of application: **04.02.2026**
(21) Application number: 25191519.5
(22) Date of filing: 24.07.2025
(51) Int. Cl.: B23K 9/28, B23K 9/29

(54) **WELDING TORCH DIFFUSER AND WELDING SYSTEM SUCH HAVING WELDING TORCH DIFFUSER FOR USE WITH WELDING WIRE LINERS TRIMMED FLUSH WITH A WELDING TORCH NECK**

(30) Priority: 31.07.2024 US 202463677701 P; 17.07.2025 US 202519272461
(71) Applicant: Illinois Tool Works Inc., Glenview IL 60025 (US)
(72) Inventor: LIZOTTE, Ryan, Glenview, 60025 (US); WHIPPLE, Brad, Glenview, 60025 (US)
(74) Representative: HGF

(57) **Abstract**

A welding torch diffuser may comprise: a first section configured to be inserted into an interior of a welding torch neck and coupled to the welding torch neck; a second section configured to receive a contact tip; and a first interior surface extending from an end of the first section toward the second section, wherein: the welding torch diffuser defines an aperture between the first section and the second section, the second section is configured to align the contact tip with the aperture, and the first interior surface defines a first cavity configured to capture a welding wire liner positioned within the welding torch neck as the first section is inserted into the interior of the welding torch neck and align the welding wire liner with the aperture.

## Description

### RELATED APPLICATIONS

The present application claims the benefit of U.S. Patent Application Serial No. 63/677,701, filed July 31, 2024, entitled "WELDING TORCH DIFFUSERS AND WELDING SYSTEMS HAVING WELDING TORCH DIFFUSERS FOR USE WITH WELDING WIRE LINERS TRIMMED FLUSH WITH A WELDING TORCH NECK." The entirety of U.S. Patent Application Serial No. 63/677,701 is expressly incorporated herein by reference.

### FIELD OF THE DISCLOSURE

This disclosure relates generally to welding torch diffusers, and more particularly to a welding torch diffusers and welding systems including welding torch diffusers for use with welding torches and with welding wire liners.

### BACKGROUND

Welding operations often utilize welding wire liners to act as a guide for a wire electrode within a welding torch. Installation of conventional diffusers involves either that wire liners be measured and cut to protrude a prescribed distance from an end of the torch neck, or that the wire liner be inserted from the diffuser end and trimmed at the opposite end of the torch cable from the diffuser. Failure to correctly install the wire liner can result in deleterious effects on weld quality and/or excessive wear on contact tips.

### SUMMARY

Welding torch diffusers and welding systems having welding torch diffusers are disclosed, substantially as illustrated by and described in connection with at least one of the figures and as set forth in the claims.

### BRIEF DESCRIPTION OF THE DRAWINGS

FIG. 1A illustrates an example welding system, in accordance with aspects of this disclosure;
FIG. 1B illustrates an example welding torch, in accordance with aspects of this disclosure;
FIG. 2A illustrates a side profile view of an example welding torch diffuser having external threading and coupled to an example welding torch neck and an example contact tip, in accordance with aspects of this disclosure;
FIG. 2B illustrates a side profile view of an example welding torch diffuser having external threading and an example welding wire liner extending beyond an example welding torch neck, in accordance with aspects of this disclosure;
FIG. 2C illustrates a side profile view of an example welding torch diffuser having external threading and an example contact tip, in accordance with aspects of this disclosure;
FIG. 3A illustrates a side profile view of an example welding torch diffuser having internal threading and an example welding torch neck, in accordance with aspects of this disclosure;
FIG. 3B illustrates a perspective view of an example welding torch diffuser having internal threading, in accordance with aspects of this disclosure;
FIG. 3C illustrates a rear view of an example welding torch diffuser having internal threading, in accordance with aspects of this disclosure;
FIG. 4A illustrates a cross-sectional view of an example welding torch diffuser having external threading coupled to an example welding torch and an example contact tip, in accordance with aspects of this disclosure;
FIG. 4B illustrates a perspective cut-away view of an example welding torch diffuser having external threading coupled to an example welding torch and an example contact tip, in accordance with aspects of this disclosure;
FIG. 5 illustrates a cross-sectional view of an example welding torch diffuser having internal threading coupled to an example welding torch and an example contact tip, in accordance with aspects of this disclosure;
FIG. 6 is a flowchart representative of a first exemplary process for assembly of an example welding torch diffuser with an example welding wire liner, an example welding torch neck, an example contract tip, and an example nozzle, in accordance with aspects of this disclosure; and
FIG. 7 is a flowchart representative of a second exemplary process for assembly of an example welding torch diffuser with an example welding wire liner, an example welding torch neck, an example contract tip, and an example nozzle, in accordance with aspects of this disclosure.

The figures are not necessarily to scale. Where appropriate, similar or identical reference numbers are used to refer to similar or identical components.

### DETAILED DESCRIPTION

Welding torch diffusers both diffuse weld shielding gases and deliver weld current to the contact tip of the welding torch. Welding operations typically utilize a wire liner to guide an electrode wire used in the welding operation within the welding torch. The electrode wire exits the wire liner and may travel a short distance through the diffuser to reach a bore of the contact tip held by the diffuser.

Conventional welding torches often require a specific trim length of a wire liner for a protrusion of the wire liner beyond a welding torch neck to avoid deleterious effects associated with improper wire liner trim (e.g., burn-backs, poor wire feeding, erratic arcing, bird-nesting of the wire, etc.). Different welding torch necks and/or diffusers recommend different trim lengths. For example, an operator of a welding torch may use over ten different welding torch diffusers for different welding operations, and each of the ten different conventional welding torch diffusers may have distinct, unequal trim lengths (e.g., between 2 mm to 35 mm beyond the torch neck). This wide variation in wire liner trim length can cause confusion for welding operators and can increase the likelihood of misuse of a welding torch diffuser by inadvertent use of an improper trim length of a welding wire liner.

Disclosed example welding torch diffusers and welding systems having welding torch diffusers enable usage of a welding wire liner that is trimmed flush with the welding torch neck. Disclosed example welding torch diffusers and welding systems also provide the operator with a way to properly compress the welding wire liner within the welding torch.

Disclosed example welding torch diffusers may provide such benefits using only a single, integrally formed component, thereby easing usage of such welding torch diffusers by a welding system operator. Further, disclosed example welding torch diffusers may be retained, without the use of another component, to a welding torch neck of a welding torch. In some such examples, such direct retention to the welding to the welding torch neck may, advantageously, both simplify production of the welding torch diffuser and separate a nozzle of the welding torch from an electrical path of the welding torch.

Disclosed example welding torch diffusers couple to an interior, rather than an exterior, of a welding torch neck of a welding torch. Coupling to the interior of the welding torch neck may improve stability and rigidity of a tool center point ("TCP") of the welding torch in robotic applications by eliminating any need for external threading on the welding torch neck and/or increasing a thickness of the welding torch neck.

Furthermore, by enabling use with a welding wire liner trimmed flush with a welding torch neck, disclosed example welding torch diffusers may reduce a risk of unseating a welding torch neck due to compression or other rearrangement of the welding wire liner within the welding torch neck by similarly reducing a length of the welding wire liner.

Disclosed example welding torch diffusers comprise: a first section configured to be inserted into an interior of a welding torch neck and coupled to the welding torch neck; a second section configured to receive a contact tip; and a first interior surface extending from an end of the first section toward the second section, wherein: the welding torch diffuser defines an aperture between the first section and the second section, the second section is configured to align the contact tip with the aperture, and the first interior surface defines a first cavity configured to capture a welding wire liner positioned within the welding torch neck as the first section is inserted into the interior of the welding torch neck and align the welding wire liner with the aperture.

In some example welding torch diffusers, the second section comprises a second interior surface defining a second cavity configured to receive the contact tip. In some such example welding torch diffusers, the second interior surface comprises a threaded portion.

In some example welding torch diffusers, the welding torch diffuser further comprises a plurality of gas ports configured to direct gas from an interior of the welding torch neck to an exterior of the welding torch diffuser, each gas port of the plurality of gas ports comprises a first port opening defined by an exterior surface of the second section. In some such example welding torch diffusers, each gas port of the plurality of gas ports further comprises a second port opening defined by the first interior surface and a longitudinal channel defined by the welding torch diffuser extending from the second port opening to the first port opening.

In some example welding torch diffusers, the welding torch diffuser further comprises an internal collar positioned between the first section and the second section, wherein the internal collar defines the aperture.

In some example welding torch diffusers, the first section and the second section are integrally formed.

In some example welding torch diffusers, the first section comprises a threaded exterior surface configured to couple the welding torch diffuser to the welding torch neck.

In some example welding torch diffusers, the welding torch diffuser further comprises an exterior torch stop, wherein: the first section comprises an exterior surface extending to the exterior torch stop; the exterior surface defines a first outside radius; and the exterior torch stop defines a second outside radius greater than the first outside radius. In some such example welding torch diffusers, the welding torch diffuser defines the aperture at an aperture position less than or equal to 100 mm from a torch stop end of the exterior torch stop along a length of the welding torch diffuser.

Disclosed example welding systems comprise: a welding torch comprising a welding torch neck, an end of the welding torch neck defining a neck opening, the welding torch configured to conduct weld current from a welding cable to the welding torch neck; a welding wire liner configured to be inserted through the welding cable via the neck opening; and a welding torch diffuser, comprising: a first section configured to be inserted into an interior of the welding torch neck and coupled to the welding torch neck; a second section configured to receive a contact tip; and a first interior surface extending from an end of the first section toward the second section, wherein: the welding torch diffuser defines an aperture between the first section and the second section, the second section is configured to align the contact tip with the aperture, and the first interior surface defines a first cavity configured to, when an end of the welding wire liner is substantially flush with the end of the welding torch neck, capture the welding wire liner positioned within the welding torch neck as the first section is inserted into the interior of the welding torch neck and align the welding wire liner with the aperture.

In some example welding systems, the second section of the welding torch diffuser comprises a second interior surface defining a second cavity configured to receive the contact tip. In some such example welding systems, the second interior surface of the welding torch diffuser comprises a threaded portion, and the contact tip comprises a threaded exterior contact tip surface configured to threadedly engage with the threaded portion of the second interior surface of the welding torch diffuser.

In some example welding systems, the welding torch diffuser further comprises a plurality of gas ports configured to direct gas from an interior of the welding torch neck to an exterior of the welding torch diffuser, wherein each gas port of the plurality of gas ports comprises a first port opening defined by an exterior surface of the second section. In some such example welding systems, each gas port of the plurality of gas ports further comprises a second port opening defined by the first interior surface of the welding torch diffuser and a longitudinal channel defined by the welding torch diffuser extending from the second port opening to the first port opening.

In some example welding systems, the welding torch diffuser further comprises an internal collar positioned between the first section and the second section of the welding torch diffuser, wherein the internal collar defines the aperture of the welding torch diffuser.

In some example welding systems, the first section of the welding torch diffuser and the second section of the welding torch diffuser are integrally formed.

In some example welding systems, the welding torch diffuser further comprises a threaded exterior surface configured to couple the welding torch diffuser to the welding torch neck; and the welding torch neck further comprises a threaded interior surface configured to threadedly engage the threaded exterior surface of the welding torch diffuser.

In some example welding systems, the welding torch diffuser further comprises an exterior torch stop; the first section of the welding torch diffuser comprises an exterior surface extending to the exterior torch stop; the exterior surface of the first section defines a first outside radius; and the exterior torch stop defines a second outside radius greater than the first outside radius. In some such example welding systems, the welding torch diffuser defines the aperture at an aperture position less than or equal to 100 mm from a torch stop end of the exterior torch stop along a length of the welding torch diffuser.

Disclosed example welding torch diffusers comprise: a first section configured to couple to a welding torch neck; a second section configured to receive a contact tip; a first interior surface extending from an end of the first section toward the second section, wherein the first interior surface defines a first cavity configured to receive the welding torch neck; and a lateral aperture extension extending at least partially into the first cavity, wherein: the lateral aperture extension defines an aperture between the first section and the second section, and the lateral aperture extension defines an interior aperture cavity configured to capture a welding wire liner positioned within the welding torch neck and align the welding wire liner with the aperture.

In some example welding torch diffusers, the first interior surface and the lateral aperture extension define a neck flange portion of the first cavity, the neck flange portion being configured to receive a flange portion of the welding torch neck when the welding torch diffuser is coupled to the welding torch neck. In some such example welding torch diffusers, the first interior surface comprises a tapered portion configured to guide or engage at least some of the flange portion of the welding torch neck, the tapered portion at least partially defining the neck flange portion of the first cavity.

In some example welding torch diffusers, the welding torch diffuser further comprises an inwardly extending interior surface, wherein: the first interior surface extends between the first end of the first section and the inwardly extending interior surface; and the lateral aperture extension extends into the first cavity from the inwardly extending interior surface. In some such example welding torch diffusers, the lateral aperture extension extends at least 3 mm from the inwardly extending interior surface.

In some example welding torch diffusers, the welding torch diffuser further comprises a plurality of gas ports configured to direct gas from an interior of the welding torch neck to an exterior of the welding torch diffuser, wherein each gas port of the plurality of gas ports comprises a port opening defined by an exterior surface of the second section.

In some example welding torch diffusers, the first interior surface comprises a threaded portion configured to couple the welding torch diffuser to the welding torch neck.

In some example welding torch diffusers, the second section comprises a second interior surface defining a second cavity configured to receive the contact tip. In some such example welding torch diffusers, the second interior surface comprises a threaded portion.

In some example welding torch diffusers, the first section and the second section are integrally formed.

Disclosed example welding systems comprise: a welding torch comprising a welding torch neck, an end of the welding torch neck defining a neck opening, the welding torch configured to conduct weld current from a welding cable to the welding torch neck; a welding wire liner configured to be inserted through the welding cable via the neck opening; and a welding torch diffuser, comprising: a first section configured to couple to the welding torch neck; a second section configured to receive a contact tip; a first interior surface extending from an end of the first section toward the second section, wherein the first interior surface defines a first cavity configured to receive the welding torch neck; and a lateral aperture extension extending at least partially into the first cavity, wherein: the lateral aperture extension defines an aperture between the first section and the second section, and the lateral aperture extension defines an interior aperture cavity configured to capture the welding wire liner and align the welding wire liner with the aperture.

In some example welding systems, the first interior surface and the lateral aperture extension define a neck flange portion of the first cavity, the neck flange portion being configured to receive a flange portion of the welding torch neck when the welding torch diffuser is coupled to the welding torch neck. In some such example welding systems, the first interior surface comprises a tapered portion configured to guide or engage at least some of the flange portion of the welding torch neck, the tapered portion at least partially defining the neck flange portion of the first cavity.

In some example welding systems, the welding torch diffuser further comprises an inwardly extending interior surface, wherein: the first interior surface extends between the first end of the first section and the inwardly extending interior surface; and the lateral aperture extension extends into the first cavity from the inwardly extending interior surface. In some such example welding systems, the lateral aperture extension extends at least 3 mm from the inwardly extending interior surface.

In some example welding systems, the welding torch diffuser further comprises a plurality of gas ports configured to direct gas from an interior of the welding torch neck to an exterior of the welding torch diffuser, wherein each gas port of the plurality of gas ports comprises a port opening defined by an exterior surface of the second section.

In some example welding systems, the first interior surface comprises a threaded portion configured to threadedly engage a threaded portion of an exterior surface of the welding torch neck.

In some example welding systems, the second section comprises a second interior surface defining a second cavity configured to receive the contact tip. In some such example welding systems, the second interior surface comprises a threaded portion.

In some example welding systems, the first section and the second section are integrally formed.

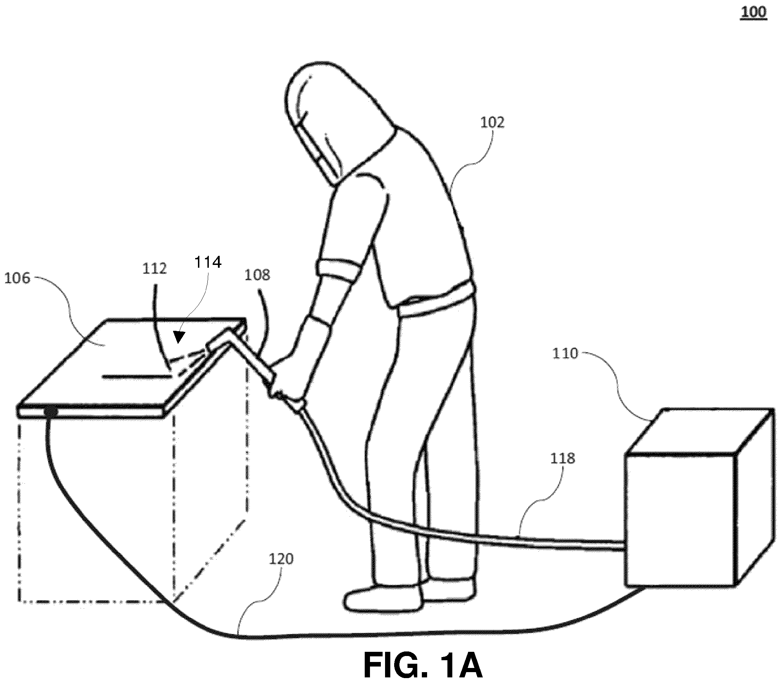

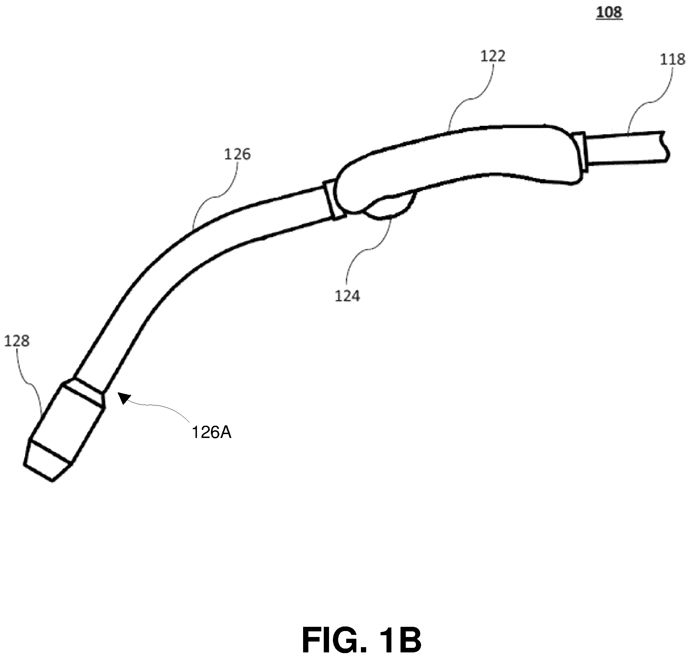

Turning now to the Figures, FIGS. 1A and 1B illustrate an example welding system 100 in which an operator 102 is welding a workpiece 106 using a welding torch 108 to which power, fuel, and/or welding material is delivered by welding equipment 110 via a welding cable 118 (for electrical welding, ground cable 120 provides the return path). In this example, the welding equipment 110 comprises a power or fuel source (generally referred to as a "power supply"), and the welding equipment 110 may further include a source of a shield gas and/or a wire feeder to provide an electrode 114 (e.g., a consumable electrode) to the welding torch 108. Accordingly, the welding equipment 110 may provide a weld current to the welding torch 108 such that the welding torch 108 conducts the weld current from the welding cable 118. As used herein, the term "consumable electrode" includes any consumable material which may be provided to the welding torch 108 by the welding equipment 110 and which may conduct a weld current (e.g., welding wire).

The welding system 100 is configured to form a weld joint 112 using a welding technique. For example, the welding system 100 may form the weld joint 112 using a gas metal arc welding ("GMAW") welding process and/or a flux cored arc welding ("FCAW") process. In some examples, the welding equipment 110 includes arc welding equipment that provides a direct current ("DC") or alternating current ("AC") to an electrode 114 of the welding torch 108, which may be a GMAW torch. The electrode 114 is a consumable electrode. For example, the electrode 114 may be welding wire delivered by a wire feeder of the welding equipment 110 to the welding torch 108.

As illustrated in FIG. 1B, the welding torch 108 generally comprises a handle 122, a trigger 124, a welding torch neck 126, and a nozzle 128. The nozzle 128 is positioned at a distal end 126A of the welding torch neck 126. Applying pressure to the trigger 124 (i.e., actuating the trigger 124) initiates the welding process, whereby output power is provided, and components of the welding equipment 110 (e.g., a wire feeder and/or a gas supply) are activated as needed. The output power may be provided in the form of a weld current conducted from the welding cable 118 and to the welding torch neck 126.

Referring to FIGS. 1A and 1B, in operation, the electrode 114 delivers a current to the point of welding on the workpiece 106 (e.g., a point along the weld joint 112). In the welding system 100, the operator 102 controls the location and operation of the electrode 114 by manipulating the welding torch 108 and triggering the starting and stopping of the current flow via, e.g., a trigger 124. When current is flowing, an arc is developed between the electrode 114 and the workpiece 106. The welding cable 118 and the electrode 114 thus deliver current and voltage sufficient to create the electric arc 116 between the electrode 114 and the workpiece 106. The arc locally melts the workpiece 106 and the electrode 114 is supplied to the weld joint 112 at the point of welding between the nozzle 128 and the workpiece 106, thereby forming a weld joint 112 when the metal cools. As described below in more detail, the nozzle 128 houses a contact tip and a welding torch diffuser, each of which may be directly or indirectly coupled to either or both of the welding torch neck 126. The nozzle 128 directs shielding gas toward the location of the arc.

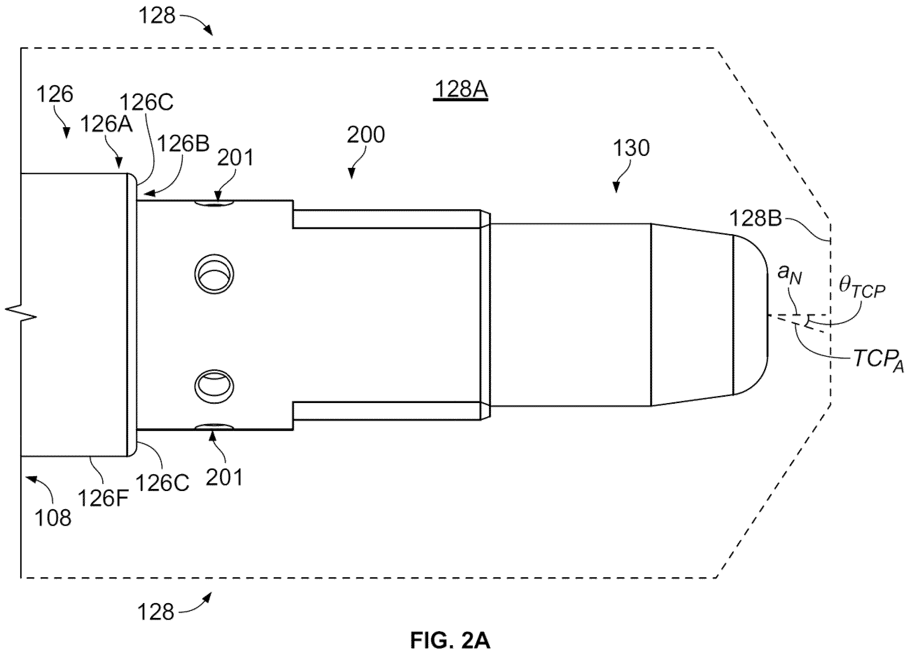

FIG. 2A illustrates the distal end 126A of the welding torch neck 126 with the nozzle 128 being transparently depicted by dashed lines, making visible an example externally threaded welding torch diffuser 200 coupled to the welding torch neck 126 and a contact tip 130 positioned within the nozzle 128. At the distal end 126A, the welding torch neck 126 includes a neck opening 126B of the welding torch neck 126 defined by a neck edge 126C of the welding torch neck 126. In this example, the externally threaded welding torch diffuser 200 is partially inserted into the neck opening 126B to couple the externally threaded welding torch diffuser 200 to the welding torch neck 126.

As described above, the welding torch 108 may conduct and emit shielding gases when conducting a welding operation. Accordingly, the externally threaded welding torch diffuser 200 may define gas ports 201 which diffuse shielding gas from within the welding torch neck 126 to a nozzle interior 128A of the nozzle 128 and adjacent the welding arc.

The contact tip 130 guides and applies a weld current to the welding wire (e.g., the electrode 114). Accordingly, the contact tip 130 may, at least partially, define a tool center point ("TCP") of the welding torch 108. ATCP is a point and/or orientation at which a consumable electrode is emitted by the welding torch 108 through a nozzle opening 128B of the nozzle 128. However, an unstable and/or loose coupling between the externally threaded welding torch diffuser 200 and the welding torch neck 126 and/or between the externally threaded welding torch diffuser 200 and the contact tip 130 can cause instability and/or misalignment of the TCP compared to a desired axis of alignment. For example, a radial center of the welding torch neck 126 defines a neck axis (*a_{N}*) and, during a welding operation, such unstable and/or loose coupling(s) can cause an actual TCP (*TCP_{A}*) of the welding torch 108 to deviate from the neck axis (*a_{N}*) by a TCP offset angle (*θ_{TCP}*)*.* Accordingly, increasing a tightness and/or rigidity of a first coupling of the externally threaded welding torch diffuser 200 to the welding torch neck 126 and/or of a second coupling of the externally threaded welding torch diffuser 200 to the contact tip 130 may decrease increase a consistency and/or precision of the actual TCP (*TCP_{A}*) and/or decrease the TCP offset angle (*θ_{TCP}*) during a welding operation conducted by the welding torch 108.

The externally threaded welding torch diffuser 200 provides couplings both to the welding torch neck 126 and to the contact tip 130 that do not require the externally threaded welding torch diffuser 200 or the contact tip 130 to engage a neck exterior surface 126F of the welding torch neck 126. Conventional welding torch diffusers often engage the neck exterior surface 126F and, thereby, impose sizing constraints on the welding torch neck 126. However, reducing a size of the welding torch neck 126 may reduce a rigidity of the welding torch neck 126 and, thereby, a stability of a TCP of the welding torch 108 during operation. Further, by being inserted into the neck opening 126B, rather than engaging the neck exterior surface 126F, the externally threaded welding torch diffuser 200 can be used with broader welding torch necks, thereby enabling increased stability of the TCP of the welding torch 108.

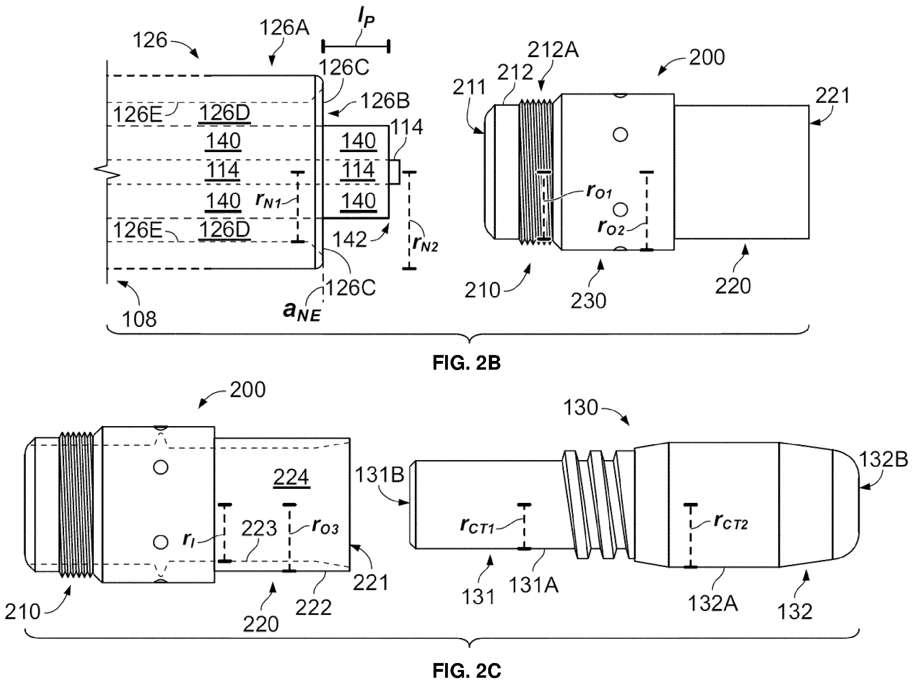

FIGS. 2B and 2C depict exploded views of an example of the welding torch neck 126, the contact tip 130, and the externally threaded welding torch diffuser 200 uncoupled from one another. The externally threaded welding torch diffuser 200 includes a first section 210 a second section 220, and an exterior torch stop 230. When the externally threaded welding torch diffuser 200 is assembled with the welding torch neck 126, some or all of the first section 210 is inserted into the neck opening 126B. The example first section 210 is configured to be inserted into the neck opening 126B by being sized and/or shaped to engage with and/or tightly fit within a neck interior 126D of the welding torch neck 126, as defined by a neck interior surface 126E of the welding torch neck 126. In examples, a first exterior surface 212 of the first section 210 defines a first outside radius (*r_{O1}*), the neck interior surface 126E defines an interior neck radius (*r_{N1}*), and the first outside radius (*r*_{O*1*}) is substantially equal to or slightly less than the interior neck radius (*r_{N1}*). The externally threaded welding torch diffuser 200 may be sized such that the exterior torch stop 230 engages with the neck edge 126C. Accordingly, either or both of the first section 210 and the neck opening 126B may have a circular shape, a substantially circular shape, or any other shape. The externally threaded welding torch diffuser 200 may, alternatively, not include the exterior torch stop 230.

To improve coupling of the first section 210 to the welding torch neck 126, some or all of the first exterior surface 212 of the first section 210 may comprise a threaded portion 212A to threadedly engage with, and thereby couple to, a complementary threaded portion of some or all of the neck interior surface 126E. The exterior torch stop 230 halts insertion of the externally threaded welding torch diffuser 200 upon abutment with a corresponding surface on the neck edge 126C or within the neck interior 126D. In examples, the exterior torch stop 230 at least partially provides a seal between the neck edge 126C and the first exterior surface 212 of the first section 210. The exterior torch stop 230 defines a second outside radius (*r*_{O*2*}), the neck edge 126C defines an exterior neck radius (*r_{N2}*). To at least partially provide the seal between the neck edge 126C and the first exterior surface 212 of the first section 210, the second outside radius (*r_{O2}*) may be greater than the first outside radius (*r_{O1}*) and/or greater than or substantially equal to the exterior neck radius (*r_{N2}*).

In examples, when the externally threaded welding torch diffuser 200 is assembled with the contact tip 130, the second section 220 of the externally threaded welding torch diffuser 200 is configured to receive some or all of a first contact tip end 131 of the contact tip 130 through a second opening 221 of the second section 220. Particularly, a second interior surface 223 of the second section 220 defines a second cavity 224, and the second cavity 224 is configured to receive some or all of the first contact tip end 131 of the contact tip 130. The second section 220 and/or the second cavity 224 may be configured to receive the contact tip 130 by, for example, being sized and/or shaped to engage with and/or tightly fit to a first exterior contact tip surface 131A of the first contact tip end 131. A second exterior surface 222 of the second section 220 defines a third outside radius (*r_{O3}*)*,* the first exterior contact tip surface 131A defines a first contact tip radius (*r_{CT1}*)*,* a second exterior contact tip surface 132A of a second contact tip end 132 of the contact tip 130 defines a second contact tip radius (*r_{CT2}*)*,* and the second interior surface 223 defines an interior radius (*r_{I}*)*.* To engage with and/or tightly fit to the first exterior contact tip surface 131A of the first contact tip end 131, the third outside radius (*r_{O3}*) may be greater than the first contact tip radius (*r_{CT1}*) and/or less than the second contact tip radius (*r_{CT2}*)*.* Further, the interior radius (*r_{I}*) may be substantially equal to or slightly greater than the first contact tip radius (*r_{CT1}*) and/or less than the second contact tip radius (*r_{CT2}*)*.*

In the examples depicted by FIGS. 2B and 2C, the first section 210 and the second section 220 of the externally threaded welding torch diffuser 200 are integrally formed (e.g., a single component having no sub-components which may be decoupled or otherwise disassembled without damaging or destroying the component). However, the first section 210 and the second section 220 may, instead, each be separate and distinct components and/or comprise one or more distinct sub-components. Accordingly, the first section 210, the second section 220, and/or any sub-components of the first section 210 and/or the second section 220 may be coupled together to assemble the externally threaded welding torch diffuser 200.

A welding wire liner 140 is positioned within the welding torch neck 126 and guides and/or aligns the electrode 114. The welding wire liner 140 may be inserted through a welding cable coupled to the welding torch 108 (for example, the welding cable 118) via the neck opening 126B. The welding wire liner 140 thereby extends within the neck interior 126D and houses the electrode 114. When the externally threaded welding torch diffuser 200 is coupled to the welding torch neck 126 and the contact tip 130, the welding wire liner 140 is partially housed within the first section 210 by extending through a first opening 211 of the first section 210. When the electrode 114 is fed through the welding wire liner 140 to the externally threaded welding torch diffuser 200, the electrode 114 extends through the welding wire liner 140 and past a distal end 142 of the welding wire liner 140, subsequently exiting a second opening 221 of the second section 220. Accordingly, in examples, the electrode 114 enters the first contact tip end 131 through a first contact tip opening 131B and exits the contact tip 130 through a second contact tip opening 132B of the second contact tip end 132.

Conventional welding torch diffusers may require the welding wire liner 140 to be trimmed to a trim length beyond the welding torch neck (e.g., a protrusion length (*l_{P}*)) specific to the conventional welding torch diffuser used, otherwise risking deleterious effects associated with improper wire liner trim. Accordingly, when using a conventional welding torch diffuser, an operator (e.g., the operator 102) may need to both determine the specific trim length of the conventional welding torch diffuser and accurately trim the welding wire liner 140 to the specific trim length. Determining the specific trim length for a conventional welding torch diffuser may require locating, via the internet or a product manual, the magnitude of the necessary trim length, as an operator may have difficulty remembering at a comfortable confidence level each specific trim length of each of a plurality of conventional welding torch diffusers used by the operator. Further, once the specific trim length is determined, accurately trimming the welding wire liner 140 to the specific trim length may be subject to significant inaccuracies if conducted without using a tape measure or other measuring tool and may be subject to human error. Additionally, to reduce time in a welding operation, a welding operator may hastily conduct such processes or not conduct such processes at all and may, thereby, worsen a product of the welding operation and/or increase risks associated with improper welding wire liner trim lengths.

However, the externally threaded welding torch diffuser 200 enables a welding wire liner-trimming process that may be more intuitive and less time-consuming than trimming processes of conventional welding torch diffusers. Prior to inserting the externally threaded welding torch diffuser 200 into the neck opening 126B, an operator of the welding system 100 (e.g., the operator 102) may trim the distal end 142 of the welding wire liner 140 substantially flush-length with the welding torch neck 126. As an example, prior to inserting the externally threaded welding torch diffuser 200 into the welding torch neck 126, an operator of the welding torch 108 may trim the protrusion length (*l_{P}*) off of the distal end 142 of the welding wire liner 140 such that the distal end 142 is trimmed substantially flush-length with a neck edge axis (*a_{NE}*) defined by the neck edge 126C.

The externally threaded welding torch diffuser 200 thereby enables a trimming process both more intuitive and comparatively less difficult to accurately perform than trimming processes of conventional welding torch diffusers. Trimming the welding wire liner 140 substantially flush-length with the welding torch neck 126 is easy to remember, compared to remembering a specific number of millimeters or fractional number of inches for each conventional welding torch diffuser used by a welding operator. Further, the neck edge 126C provides an easy-to-use mechanism for ensuring precision of the trim without requiring the use of a measuring mechanism, by providing a surface against which to trim the welding wire liner 140 (e.g., the neck edge 126C). After trimming the welding wire liner 140 to be substantially flush-length with the welding torch neck 126, the first section 210 is inserted into the neck opening 126B such that the distal end 142 of the welding wire liner 140 (now trimmed) is inserted into the first opening 211.

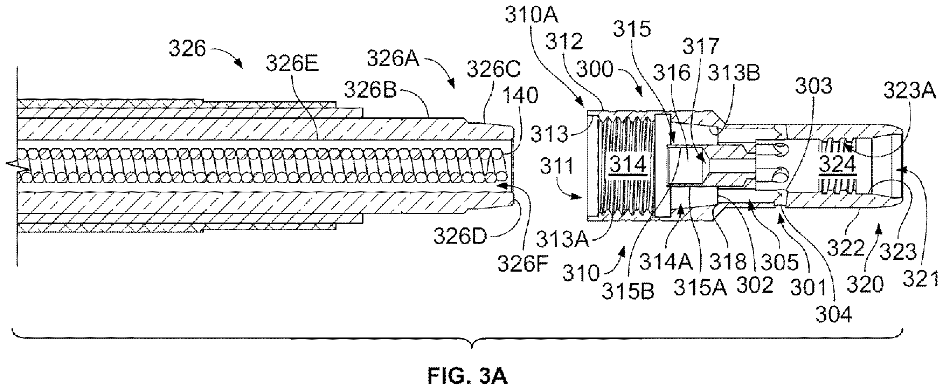

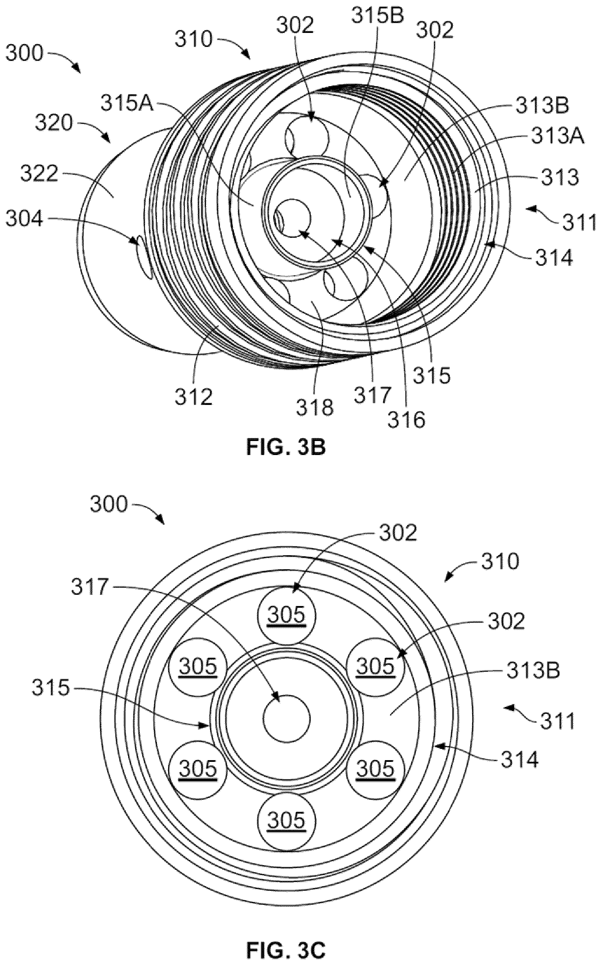

FIG. 3A depicts an exploded view of an example of an internally threaded welding torch diffuser 300 and a welding torch neck 326, and FIGS. 3B and 3C each depict perspective and rear views, respectively, of examples of the internally threaded welding torch diffuser 300. The internally threaded welding torch diffuser 300 may be used alternatively to the externally threaded welding torch diffuser 200, and the internally threaded welding torch diffuser 300 may also be coupled to other designs of welding torch necks (e.g., the welding torch neck 126). The welding torch neck 326 and the internally threaded welding torch diffuser 300 each include a number of similar components to those of the welding torch neck 126 and the externally threaded welding torch diffuser 200, respectively. However, as can be seen in the example of FIG. 3A, the internally threaded welding torch diffuser 300 couples to the welding torch neck 326 by inserting a distal end 326A of the welding torch neck 326 into a first opening 311 of a first end 310A of a first section 310 of the internally threaded welding torch diffuser 300. Accordingly, when the welding torch neck 326 is coupled to the internally threaded welding torch diffuser 300, the distal end 326A of the welding torch neck 326 is positioned within a first cavity 314 of the first section 310.

As best shown in the examples of FIGS. 3A and 3B, the first cavity 314 is defined by a first interior surface 313 of the first section 310 extending toward a second section 320 of the internally threaded welding torch diffuser 300. In examples, the first interior surface 313 includes a threaded portion 313A which engages complementary threading on an exterior surface 326B of the welding torch neck 326 to couple the internally threaded welding torch diffuser 300 to the welding torch neck 326.

As best shown in the examples of FIGS. 3B and 3C, a lateral aperture extension 315 extends into the first cavity 314. The first interior surface 313 terminates at an inwardly extending interior surface 318, which extends toward a radial center of the internally threaded welding torch diffuser 300 and terminates at a laterally extending extension surface 315A. In some examples, the lateral aperture extension 315 extends at least 3 mm from the inwardly extending interior surface 318. The first interior surface 313, the inwardly extending interior surface 318, and the laterally extending extension surface 315A define a neck flange portion 314A of the first cavity 314. The neck flange portion 314A of the first cavity 314 is sized to receive a flange portion 326C of the welding torch neck 326 such that a neck edge 326D at an end of the flange portion 326C of the welding torch neck 326 engages the inwardly extending interior surface 318 when the internally threaded welding torch diffuser 300 is coupled to the welding torch neck 326. In the example of FIG. 3A, a tapered portion 313B of the first interior surface 313 partially defines the neck flange portion 314A of the first cavity 314. In some examples, the tapered portion 313B and the flange portion 326C of the welding torch neck 326 may have complementary tapers such that the tapered portion 313B engages the flange portion 326C of the welding torch neck 326 when the internally threaded welding torch diffuser 300 and the welding torch neck 326 are coupled. The tapered portion 313B may, thereby, guide the welding torch neck 326 as the welding torch neck 326 is being coupled to the internally threaded welding torch diffuser 300 to align the welding torch neck 326 relative to, e.g., the first cavity 314, the lateral aperture extension 315, the threaded portion 313A of the first interior surface 313, etc.

An interior surface 315B of the lateral aperture extension 315 defines an interior aperture cavity 316 within the internally threaded welding torch diffuser 300 and an aperture 317. A neck interior surface 326E of the welding torch neck 326 defines a neck interior cavity 326F. When the internally threaded welding torch diffuser 300 is coupled to the welding torch neck 326, the interior aperture cavity 316 is positioned within a neck interior cavity 326F of the welding torch neck 326, thereby capturing the welding wire liner 140 within the interior aperture cavity 316. Accordingly, the lateral aperture extension 315 can capture the welding wire liner 140 within the interior aperture cavity 316 and align the welding wire liner 140 with the aperture 317. Because the lateral aperture extension 315 extends into the neck interior cavity 326F to capture the welding wire liner 140, the welding wire liner 140 may be trimmed flush with or interior to the neck edge 326D of the welding torch neck 326, rather than, e.g., requiring that the welding wire liner 140 extend beyond the neck edge 326D to capture the welding wire liner 140 and align the welding wire liner 140with the aperture 317.

In the example depicted in FIG. 3A, the first section 310 and the second section 320 of the internally threaded welding torch diffuser 300 are integrally formed (e.g., a single component having no sub-components which may be decoupled or otherwise disassembled without damaging or destroying the component). However, the first section 310 and the second section 320 may, instead, each be separate and distinct components and/or comprise one or more distinct sub-components. Accordingly, the first section 310, the second section 320, and/or any sub-components of the first section 310 and/or the second section 320 may be coupled together to assemble the internally threaded welding torch diffuser 300.

Referring now to FIGS. 3A-3C, and as described above, the welding torch 108 may conduct and emit shielding gases when conducting a welding operation. Accordingly, and as best shown in the example of FIG. 3A, the internally threaded welding torch diffuser 300 may define gas ports 301 which diffuse shielding gas from within the welding torch neck 126, e.g., in a manner similar to the gas ports 201 of the externally threaded welding torch diffuser 200. In examples, and as best depicted in the examples of FIGS. 3B-3C, the inwardly extending interior surface 318 defines a first port opening 302 of each of the gas ports 301, such that the first port openings 302 open into the first cavity 314 of the first section 310. In examples, and as shown in FIG. 3A, the second interior surface 323 of the second section 320 defines a second port opening 303 of each of the gas ports 301, such that the second port openings 303 open into the second cavity 324 of the second section 320. Any, some, or all of the second port openings 303 may, additionally or alternatively, be positioned interior from the second exterior surface 322 of the second section 320. In this example, the second exterior surface 322 defines a third port opening 304 of each of the gas ports 301. Any, some, or all of the third port openings 304 may, additionally or alternatively, be defined by a first exterior surface 312 of the first section 310. In this example, the internally threaded welding torch diffuser 300 further defines longitudinal channels 305 of each of the gas ports 301 extending between the first port opening 302 to the port openings 303, 304 of each of the gas ports 301. Any, some, or all of the longitudinal channels 305 may, additionally or alternatively, extend between any two of the port openings 302, 303, 304 or from only one of the port openings 302, 303, 304.

The gas ports 301 provide an outlet for gas from any, some, or all of the first cavity 314, the second cavity 324, and/or the neck interior cavity 326F to an exterior of the internally threaded welding torch diffuser 300 (e.g., a welding environment) by, e.g., directing gas from the first port openings 302 and/or the second port openings 303 and out the third port opening 304. Accordingly, combinations of the port openings 302, 303, the port openings 302, 304, and/or the port openings 302, 303, 304 may direct gas from the neck interior cavity 326F to an exterior of the internally threaded welding torch diffuser 300 (e.g., a welding environment) from the first port opening 302 via the longitudinal channel 305 and/or from the second port opening 303 and out the third port opening 304.

In examples, the internally threaded welding torch diffuser 300 includes only one of the gas ports 301, none of the gas ports 301, or any plurality of the gas ports 301. In examples, the internally threaded welding torch diffuser 300 defines only one of the gas ports 301, any plurality of the gas ports 301, or none of the gas ports 301. In examples, any, some, or all of the gas ports 301 include only one of the first port openings 302, any plurality of the first port openings 302, or none of the first port openings 302. In examples, any, some, or all of the gas ports 301 include only one of the second port openings 303, any plurality of the second port openings 303, or none of the second port openings 303. In examples, any, some, or all of the gas ports 301 include only one of the third port openings 304, any plurality of the third port openings 304, or none of the third port openings 304. In examples, any, some, or all of the gas ports 301 include only one of the longitudinal channels 305, any plurality of the longitudinal channels 305, or none of the longitudinal channels 305. Any, some, or all of the port openings 302, 303, 304 and/or the longitudinal channel 305 may be machined into the internally threaded welding torch diffuser 300.

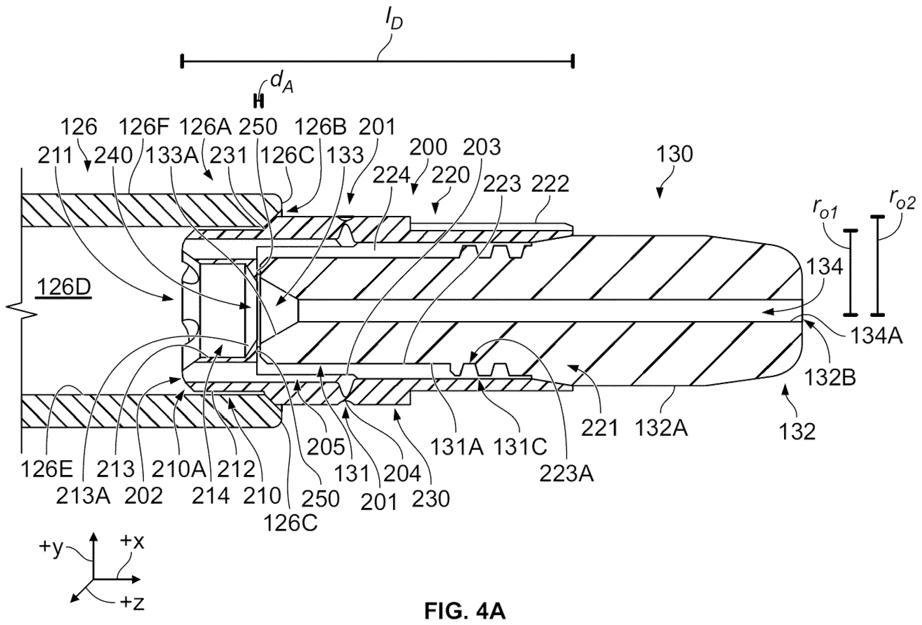

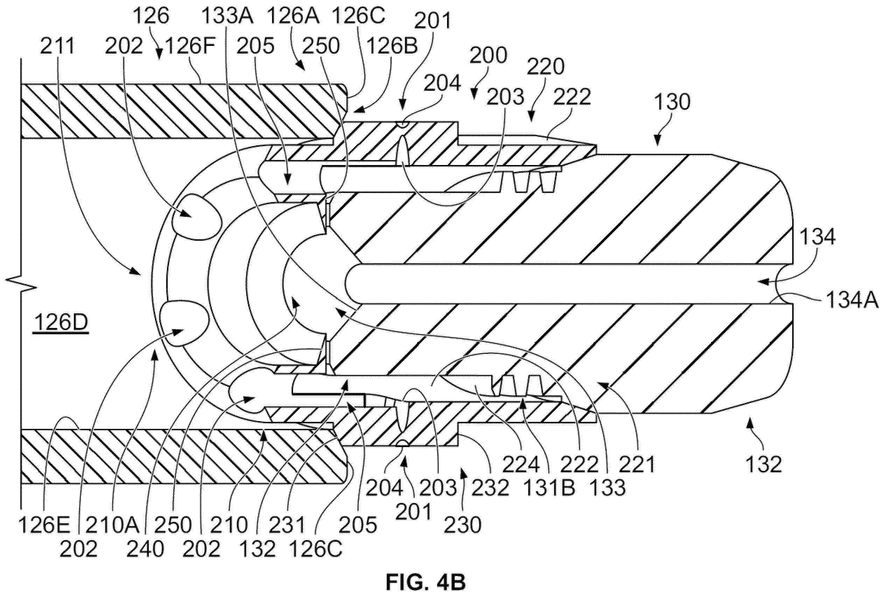

FIGS. 4A and 4B illustrate cross-sectional side and perspective views, respectively, of an example of the externally threaded welding torch diffuser 200 coupled to the welding torch neck 126 and the contact tip 130. As can be seen in FIG. 4A, the first interior surface 213 of the first section 210 extends from a first end 210A of the first section 210 and toward the second section 220. Accordingly, the first interior surface 213 of the first section 210 defines a first cavity 214 within the first section 210.

The externally threaded welding torch diffuser 200 further defines an aperture 240 between the first section 210. The aperture 240 connects the first cavity 214 and the second cavity 224 of the second section 220. The first cavity 214 is configured to capture a welding wire liner (for example, the welding wire liner 140) by, e.g., being sized and shaped to tightly house the welding wire liner. In examples, the first interior surface 213 engages a distal end (e.g., the distal end 142) of the welding wire liner. In examples, the first cavity 214 is configured to align the welding wire liner and, thereby, a consumable electrode (e.g., the electrode 114) positioned within the welding wire liner with the aperture 240. To align the welding wire liner, the first interior surface 213 may include a tapered portion 213A which aligns or substantially aligns the welding wire liner with the aperture 240 by biasing the welding wire liner towards aligning with the aperture 240. Either or both of the aperture 240 and the first contact tip opening 131B are configured to permit the consumable electrode, but not the welding wire liner, to extend into the contact tip 130. Accordingly, in examples, either or both of the aperture 240 and the first contact tip opening 131B define a smaller 2-dimensional area (as measured, e.g., in the y-z plane of the coordinate scheme depicted in FIG. 4A) than a 2-dimensional area of the first opening 211. Additionally and/or alternatively, either or both of the aperture 240 and the first contact tip opening 131B may be sized narrowly enough to prevent passage of the welding wire liner but widely enough to permit passage of the consumable electrode.

Since the welding wire liner is trimmed flush-length with the welding torch neck 126, the externally threaded welding torch diffuser 200 defines the aperture 240 such that, when the externally threaded welding torch diffuser 200 is coupled to the welding torch neck 126, the aperture 240 is positioned in a vicinity of the neck edge 126C. In examples, the externally threaded welding torch diffuser 200 defines the aperture 240 to be positioned in radial alignment or substantial radially alignment with the neck edge 126C (i.e., substantially even with the neck edge 126C in the y-direction of the coordinate scheme of FIG. 4A, and/or substantially even with the neck edge axis (*a_{N}*) of FIG. 2B).

In examples, the externally threaded welding torch diffuser 200 additionally or alternatively defines the aperture 240 to be positioned within the neck interior 126D. When the externally threaded welding torch diffuser 200 and the welding torch neck 126 are coupled, the first cavity 214 is, thereby, positioned partially or entirely within the neck interior 126D. In some such examples, the first cavity 214 captures the welding wire liner partially or entirely within the neck interior 126D. In the example of FIG. 4A, the externally threaded welding torch diffuser 200 defines the aperture 240 at an aperture distance (d*_{A}*) from a torch stop end 231 of the exterior torch stop 230 along a length (*l_{D}*) of the externally threaded welding torch diffuser 200. In examples, the aperture distance (*d_{A}*) is greater than or equal to 0 mm. In some such examples, the aperture distance (*d_{A}*) is greater than or equal to 0 mm and less than or equal to 100 mm from the torch stop end 231 (e.g., in the -x-direction of the coordinate scheme of FIG. 4A). In some such examples, the aperture distance (*d_{A}*) is greater than or equal to 0 mm and less than or equal to 70 mm.

In the example of FIGS. 4A and 4B, the contact tip 130 includes a contact tip cavity 133 defined by a contact tip cavity surface 133A of the contact tip 130 and positioned at the first contact tip end 131. As described above, the aperture 240 and/or the first contact tip opening 131B are configured to prevent a welding wire liner (e.g., the welding wire liner 140) captured by the first cavity 214 from extending through the aperture 240 and/or the first contact tip opening 131B. The contact tip 130 further includes a contact tip channel 134 defined by a contact tip channel surface 134A of the contact tip 130.The contact tip channel 134 extends from the contact tip cavity 133 to the second contact tip opening 132B. As described above, the first cavity 214 may align or substantially align the welding wire liner with the aperture 240. The first cavity 214 may, thereby, also align the consumable electrode within the welding wire liner with the contact tip channel 134. Accordingly, the externally threaded welding torch diffuser 200 may align a TCP of the welding torch 108.

As best shown in FIG. 4A, in examples, the aperture 240 is defined by an internal collar 250 of the externally threaded welding torch diffuser 200 positioned between the first section 210 and the second section 220. Accordingly, in this example, the internal collar 250 defines the aperture distance (*d_{A}*) of the aperture 240 from the torch stop end 231. While the example of FIG. 4A depicts the aperture 240 as having a negligible length in the x-direction of the coordinate scheme of FIG. 4A between the first section 210 and the second section 220, the aperture 240 may, alternatively, define any length between the first section 210 and the second section 220.

Referring still to FIGS. 4A and 4B, and as described with respect to FIGS. 2A-2C, the first section 210 is configured to be inserted into the neck opening 126B. For example, the first exterior surface 212 of the first section 210 is sized and/or shaped to engage with and/or tightly fit within the neck interior 126D of the welding torch neck 126, as defined by the neck interior surface 126E of the welding torch neck 126. Accordingly, the first section 210 may be similarly configured to align the aperture 240 with the welding torch neck 126 by, e.g., including threading on the first exterior surface 212 of the first section 210 and on the neck interior surface 126E of the welding torch neck 126.

Referring still to FIGS. 4A and 4B, and as also described with respect to FIGS. 2A-2C, the second section 220 of the externally threaded welding torch diffuser 200 is configured to receive some or all of a first contact tip end 131 of the contact tip 130 through a second opening 221 of the second section 220. Accordingly, the second section 220 may be similarly configured to align the contact tip 130 with the aperture 240. Particularly, the second section 220 may be configured to align the contact tip cavity 133 and/or the contact tip channel 134 with the aperture 240. In examples, to improve coupling of the second section 220 to the contact tip 130 and/or alignment of the contact tip 130 with the aperture 240, some or all of the second interior surface 223 of the second section 220 includes a threaded portion 223A to threadedly engage with and, thereby, couple to a threaded portion 131C of the first exterior contact tip surface 131A.

As best depicted in FIG. 4B, and as previously described with respect to FIG. 2A, the externally threaded welding torch diffuser 200 defines the gas ports 201. In this example, the first interior surface 213 of the first section 210 defines a first port opening 202 of each of the gas ports 201 positioned at the first end 210A of the first section 210. In examples, the second interior surface 223 of the second section 220 defines a second port opening 203 of each of the gas ports 201 positioned, along the diffuser length (*l_{D}*), interior from the exterior torch stop 230. Any, some, or all of the second port openings 203 may, additionally or alternatively, be positioned interior from the second exterior surface 222 of the second section 220. In this example, the exterior torch stop 230 defines a third port opening 204 of each of the gas ports 201. Any, some, or all of the third port openings 204 may, additionally or alternatively, be defined by the second exterior surface 222. In this example, the externally threaded welding torch diffuser 200 further defines a longitudinal channel 205 of each of the gas ports 201 extending between the first port opening 202 to the port openings 203, 204 of each of the gas ports 201. Any, some, or all of the longitudinal channels 205 may, additionally or alternatively, extend between any two of the port openings 202, 203, 204 or from only one of the port openings 202, 203, 204.

The gas ports 201 provide an outlet for gas from any, some, or all of the first cavity 214, the second cavity 224, and/or the neck interior 126D to an exterior of the externally threaded welding torch diffuser 200 (e.g., a welding environment) by, e.g., directing gas from the first port openings 202 and/or the second port openings 203 and out the third port opening 204. Accordingly, combinations of the port openings 202, 203, the port openings 202, 204, and/or the port openings 202, 203, 204 may direct gas from the neck interior 126D to an exterior of the externally threaded welding torch diffuser 200 (e.g., a welding environment) from the first port opening 202 via the longitudinal channel 205 and/or from the second port opening 203 and out the third port opening 204.

In examples, the externally threaded welding torch diffuser 200 includes only one of the gas ports 201, none of the gas ports 201, or any plurality of the gas ports 201. In examples, the externally threaded welding torch diffuser 200 defines only one of the gas ports 201, any plurality of the gas ports 201, or none of the gas ports 201. In examples, any, some, or all of the gas ports 201 include only one of the first port openings 202, any plurality of the first port openings 202, or none of the first port openings 202. In examples, any, some, or all of the gas ports 201 include only one of the second port openings 203, any plurality of the second port openings 203, or none of the second port openings 203. In examples, any, some, or all of the gas ports 201 include only one of the third port openings 204, any plurality of the third port openings 204, or none of the third port openings 204. In examples, any, some, or all of the gas ports 201 include only one of the longitudinal channels 205, any plurality of the longitudinal channels 205, or none of the longitudinal channels 205. Any, some, or all of the port openings 202, 203, 204 and/or the longitudinal channel 205 may be machined into the externally threaded welding torch diffuser 200.

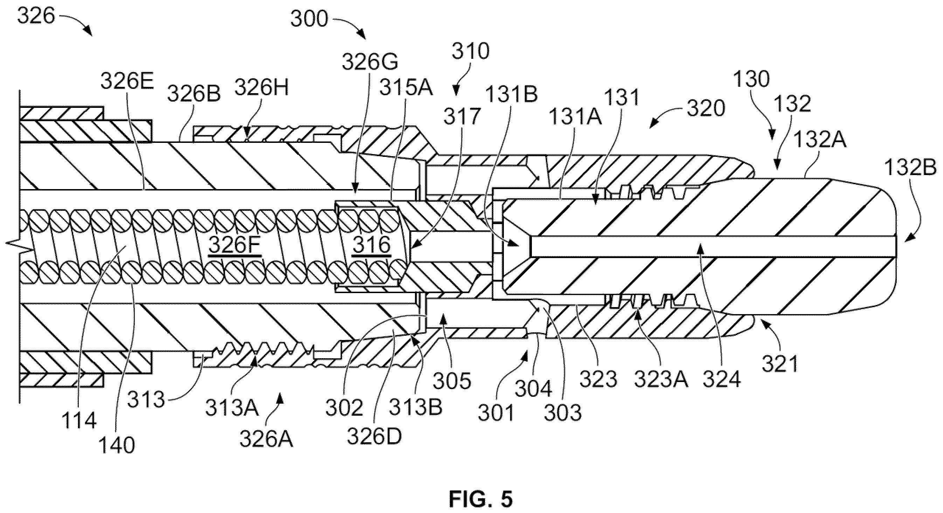

FIG. 5 illustrates a cross-sectional side view of an example of the internally threaded welding torch diffuser 300 coupled to the welding torch neck 326 and the contact tip 130. In some examples, the internally threaded welding torch diffuser 300 may be coupled to other designs of contact tips.

When the internally threaded welding torch diffuser 300 is coupled to the welding torch neck 126, the welding wire liner 140 is partially housed within the first section 310 by extending through the first opening 311 of the first section 310. In the example of FIG. 5, the lateral aperture extension 315 captures the welding wire liner 140, e.g., to align the welding wire liner 140 with the aperture 317. When the electrode 114 is fed through the welding wire liner 140 to the internally threaded welding torch diffuser 300, the electrode 114 extends through the welding wire liner 140 and past a distal end 142 of the welding wire liner 140, subsequently exiting a second opening 221 of the second section 220. In some examples, the lateral aperture extension 315 captures the electrode 114 but not the welding wire liner 140. In some examples, the lateral aperture extension 315 does not extend beyond the aperture 317 (e.g., such that the lateral aperture extension 315 does not define the interior aperture cavity 316).

In the example of FIG. 5, when the internally threaded welding torch diffuser 300 is coupled to the welding torch neck 326, the laterally extending extension surface 315A of the lateral aperture extension 315 and the neck interior surface 326E of the welding torch neck 326 are spaced apart, thereby defining a neck spacing 326G within the neck interior cavity 326F. The neck spacing 326G may extend partially or wholly about the laterally extending extension surface 315A. As described above, the gas ports 301 may direct shielding gases from within the neck interior cavity 326F to an exterior of the welding torch neck 326. Accordingly, the neck spacing 326G provides a passage through which gases may enter the gas ports 301 (e.g., through the first port openings 302) from the neck interior cavity 326F and thereby traverse the longitudinal channels 305 to exit through the third port openings 304. In some examples, the tapered portion 313B of the first interior surface 313 may be sized and/or angled to limit an extent to which the flange portion 326C of the welding torch neck 326 can extend into the first cavity 314 of the first section 310, e.g., to prevent the first port openings 302 from being obstructed by the flange portion 326C.

To couple the internally threaded welding torch diffuser 300 to the welding torch neck 326, the exterior surface 326B of the welding torch neck 326 may include a threaded portion 326H (e.g., external threading). The threaded portion 326H may begin, e.g., at an end of the flange portion 326C. The threaded portion 326H may extend across some or all of the exterior surface 326B. In some examples, the exterior surface 326B includes no external threading. In some examples, the internally threaded welding torch diffuser 300 and the welding torch neck 326 may couple via an additional and/or alternative mechanism, such as a quick-change coupling mechanism and/or an air chuck.

In examples, when the internally threaded welding torch diffuser 300 is assembled with the contact tip 130, the second section 320 of the internally threaded welding torch diffuser 300 is configured to receive some or all of the first contact tip end 131 of the contact tip 130 through a second opening 321 of the second section 320. Particularly, a second interior surface 323 of the second section 320 defines a second cavity 324, and the second cavity 324 is configured to receive some or all of the first contact tip end 131 of the contact tip 130. The second section 320 and/or the second cavity 324 may be configured to receive the contact tip 130 by, for example, being sized and/or shaped to engage with and/or tightly fit to the first exterior contact tip surface 131A of the first contact tip end 131. The second section 320 further comprises a second exterior surface 322. In some examples, to engage with and/or tightly fit to the first exterior contact tip surface 131A of the first contact tip end 131, components of the second section 320 (e.g., the second exterior surface 322, the second interior surface 323, etc.) and/or components of the contact tip 130 (e.g., the first exterior contact tip surface 131A, the second exterior contact tip surface 132A, etc.) may individually and/or collectively define radii which are sized such that, when the internally threaded welding torch diffuser 300 is coupled to the contact tip 130, components of the second section 320 may engage and/or tightly fit to such components of the contact tip 130, such as in the manner described with respect to the second section 220 of the externally threaded welding torch diffuser 200 and the contact tip 130. In examples, when the internally threaded welding torch diffuser 300, the welding torch neck 326, and the contact tip 130 are coupled, the electrode 114 extends from the aperture 317 and into the second cavity 324, where the electrode enters the first contact tip end 131 through the first contact tip opening 131B and exits the contact tip 130 through the second contact tip opening 132B of the second contact tip end 132.

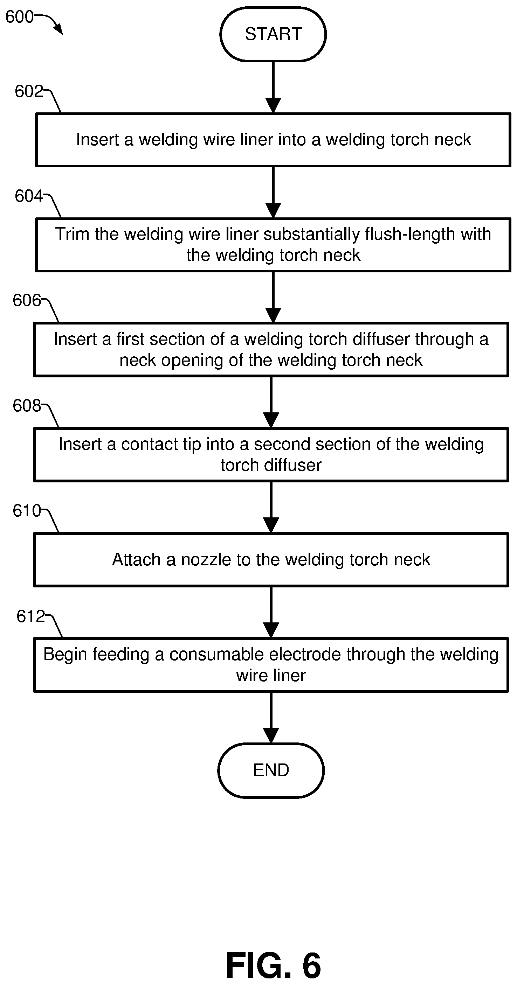

FIG. 6 is a flow chart representative of an exemplary process 600 for assembling a welding torch diffuser (e.g., the externally threaded welding torch diffuser 200) with a welding torch neck (e.g., the welding torch neck 126), a contact tip (e.g., the contact tip 130), and a nozzle (e.g., the nozzle 128) and beginning a welding operation. In the description herein of the exemplary process 600, reference is made to examples of various components described herein. However, other examples of any of such components may be alternatively and/or additionally used according to the exemplary process 600. Unless otherwise expressly stated, it is in no way intended that the exemplary process 600 be construed as requiring that its steps be performed in a specific order.

Referring still to FIG. 6, and with reference to FIG. 2B as an example, at block 602, the welding wire liner 140 is inserted into the welding torch neck 126. The welding wire liner 140 may protrude from the welding torch neck 126 a protrusion length (*l_{P}*).

Referring still to FIG. 6, and with reference to FIG. 2B as an example, at block 604, the welding wire liner 140 is trimmed substantially flush-length with the welding torch neck 126. For example, the protrusion length (*l_{P}*) is trimmed off of the distal end 142 of the welding wire liner 140 such that the distal end 142 is trimmed substantially flush-length with the neck edge axis (*a_{NE}*) of the neck edge 126C.

Referring still to FIG. 6, and with reference to FIGS. 2B and 4A as examples, at block 606 the first section 210 of the externally threaded welding torch diffuser 200 is inserted through the neck opening 126B of the welding torch neck 126. Accordingly, the externally threaded welding torch diffuser 200 may be coupled to the welding torch neck 126. In examples, the first exterior surface 212 of the first section 210 engages the neck interior surface 126E of the welding torch neck 126. In some such examples, some or all of the first exterior surface 212 is threaded or comprises a threaded portion, some or all of the neck interior surface 126E is threaded or comprises a threaded portion, and the first exterior surface 212 threadedly engages the neck interior surface 126E. The first section 210 is inserted into the neck opening 126B such that the welding wire liner 140 is inserted into the first opening 211 of the first section 210. The first section 210 thereby houses the welding wire liner 140 within the first cavity 214. In examples, some or all of the first interior surface 213 of the first section 210, such as the tapered portion 213A, engage the welding wire liner 140 to align the welding wire liner 140 relative to the welding torch neck 126.

Referring still to FIG. 6, and with reference to FIGS. 2C and 4A as examples, at block 608, the contact tip 130 is inserted into the second section 220 of the externally threaded welding torch diffuser 200. Accordingly, the externally threaded welding torch diffuser 200 may be coupled to the contact tip 130. In examples, the second interior surface 223 of the second section 220 engages the first exterior contact tip surface 131A of the contact tip 130. In some such examples, the second interior surface 223 comprises the threaded portion 223A, the first exterior contact tip surface 131A comprises the threaded portion 131C, and the second interior surface 223 threadedly engages the first exterior contact tip surface 131A.

Referring still to FIG. 6, and with reference to FIGS. 1B, 2A, and 4A as examples, at block 610, the nozzle 128 is attached to the welding torch neck 126. The nozzle 128 is attached at the distal end 126A of the welding torch neck 126. In examples, the nozzle 128 partially encloses the externally threaded welding torch diffuser 200 and the contact tip 130 within the nozzle interior 128A. In examples, the nozzle opening 128B is substantially aligned with any, some, or all of the neck opening 126B, the first opening 211, the aperture 240, the second opening 221, the first contact tip opening 131B, and/or the second contact tip opening 132B.

Referring still to FIG. 6, and with reference to FIGS. 1A, 2A-2C, and 4A as examples, at block 612, a welding wire feeder of the welding equipment 110 begins feeding the electrode 114 through the welding wire liner 140. Accordingly, the block 612 may represent the beginning of a welding operation. The electrode 114 travels within the welding wire liner 140 through the welding torch neck 126 and out of the neck opening 126B. The electrode 114 exits the distal end 142 of the welding wire liner 140 and may extend through any, some, or all of the first opening 211, the aperture 240, the second opening 221, the first contact tip opening 131B, and/or the second contact tip opening 132B.

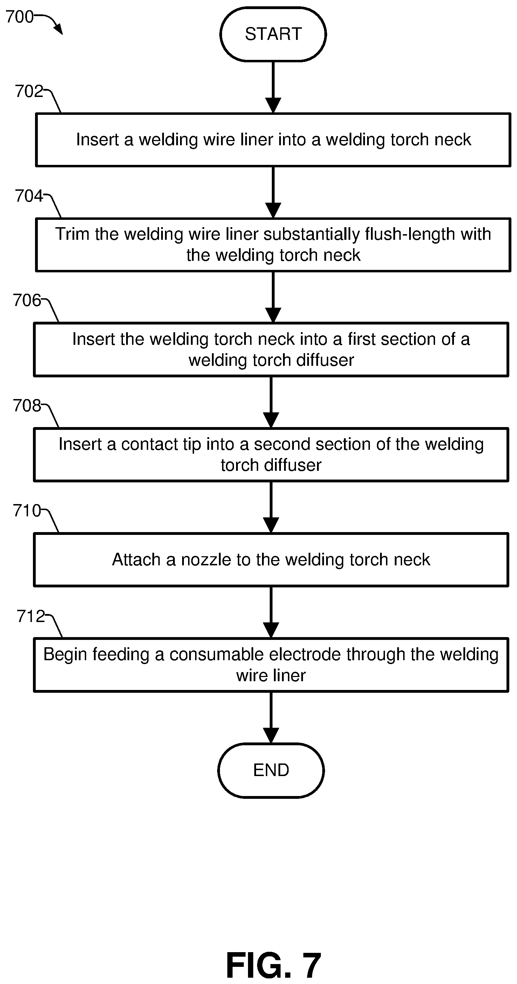

FIG. 7 is a flow chart representative of an exemplary process 700 for assembling a welding torch diffuser (e.g., the internally threaded welding torch diffuser 300) with a welding torch neck (e.g., the welding torch neck 326), a contact tip (e.g., the contact tip 130), and a nozzle (e.g., the nozzle 128) and beginning a welding operation. In the description herein of the exemplary process 700, reference is made to examples of various components described herein. However, other examples of any of such components may be alternatively and/or additionally used according to the exemplary process 700. Unless otherwise expressly stated, it is in no way intended that the exemplary process 700 be construed as requiring that its steps be performed in a specific order.

Referring still to FIG. 7, and with reference to FIG. 3A as an example, at block 702, the welding wire liner 140 is inserted into the welding torch neck 326. The welding wire liner 140 may protrude from the welding torch neck 126 a protrusion length (e.g., a length similar to the protrusion length (*l_{P}*) depicted in FIG. 2B).

Referring still to FIG. 7, and with reference to FIGS. 3A and 5 as examples, at block 704, the welding wire liner 140 is trimmed substantially flush-length with the welding torch neck 326. For example, a protrusion length of the welding wire liner 140 is trimmed off of the welding wire liner 140 such that a distal end of the welding wire liner 140 is trimmed substantially flush-length with a neck edge axis of the neck edge 326D (e.g., an axis similar to the a neck edge axis (*a_{NE}*) depicted in FIG. 2B).

Referring still to FIG. 7, and with reference to FIGS. 3A and 5 as examples, at block 706 the welding torch neck 326 is inserted through the first opening 311 of the first section 310 and into the first cavity 314 of the first section 310 of the internally threaded welding torch diffuser 300. Accordingly, the internally threaded welding torch diffuser 300 may be coupled to the welding torch neck 126. In examples, the first interior surface 313 of the first section 310 engages the exterior surface 326B of the welding torch neck 3126. In some such examples, the first interior surface 313 comprises the threaded portion 313A, the exterior surface 326B of the welding torch neck 326 comprises the threaded portion 326H, and the threaded portion 313A engages the threaded portion 326H to threadedly couple the internally threaded welding torch diffuser 300 and the welding torch neck 326. The welding torch neck 326 is inserted into the first opening 311 of the first section 310 such that the lateral aperture extension 315 is extended into the neck interior cavity 326F as the welding wire liner 140 is extended into the first cavity 314 of the first section 310. The lateral aperture extension 315 captures the welding wire liner 140 in the interior aperture cavity 316, and the interior surface 315B of the lateral aperture extension 315 aligns the welding wire liner 140 with the aperture 317. The lateral aperture extension 315 thereby houses the welding wire liner 140 within the interior aperture cavity 316.

Referring still to FIG. 7, and with reference to FIG. 5 as an example, at block 708, the contact tip 130 is inserted into the second section 320 of the internally threaded welding torch diffuser 300. Accordingly, the internally threaded welding torch diffuser 300 may be coupled to the contact tip 130. In examples, the second interior surface 323 of the second section 320 engages the first exterior contact tip surface 131A of the contact tip 130. In some such examples, the second interior surface 323 comprises the threaded portion 323A, the first exterior contact tip surface 131A comprises the threaded portion 131C, and the second interior surface 323 threadedly engages the first exterior contact tip surface 131A.

Referring still to FIG. 7, and with reference to FIGS. 1B, 3A, and 5 as examples, at block 710, the nozzle 128 is attached to the welding torch neck 326. The nozzle 128 is attached at the distal end 326A of the welding torch neck 326. In examples, the nozzle 128 partially encloses the internally threaded welding torch diffuser 300 and the contact tip 130 within the nozzle interior 128A. In examples, the nozzle opening 128B is substantially aligned with any, some, or all of the neck opening 126B, the first opening 311, the aperture 317, the second opening 321, the first contact tip opening 131B, and/or the second contact tip opening 132B.

Referring still to FIG. 7, and with reference to FIGS. 1A, 3A, and 5 as examples, at block 712, a welding wire feeder of the welding equipment 110 begins feeding the electrode 114 through the welding wire liner 140. Accordingly, the block 712 may represent the beginning of a welding operation. The electrode 114 travels within the welding wire liner 140 through the welding torch neck 126 and out of the neck opening 126B. The electrode 114 exits the distal end 142 of the welding wire liner 140 and may extend through any, some, or all of the first opening 311, the aperture 317, the second opening 321, the first contact tip opening 131B, and/or the second contact tip opening 132B.

Features described herein make reference to the accompanying drawings in which exemplary embodiments of the disclosure are shown. Whenever possible, the same reference numerals are used throughout the drawings to refer to the same or like parts. However, it should be understood that the systems of this disclosure can be embodied in many different forms and should not be construed as limited to the embodiments set forth herein.

It is to be understood that, as used herein the terms "the," "a," or "an," mean "at least one," and should not be limited to "only one" unless explicitly indicated to the contrary. Thus, for example, reference to "a component" includes embodiments having two or more such components unless the context clearly indicates otherwise.

As used herein, the word "exemplary" means "serving as an example, instance, or illustration." The embodiments described herein are not limiting, but rather are exemplary only. It should be understood that the described embodiments are not necessarily to be construed as preferred or advantageous over other embodiments. Moreover, the terms "embodiments of the invention," "embodiments," or "invention" do not require that all embodiments of the invention include the discussed feature, advantage, or mode of operation.

Unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that any particular order be inferred.

As utilized herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z". As utilized herein, the term "exemplary" means serving as a non-limiting example, instance, or illustration. As utilized herein, the terms "e.g." and "for example" set off lists of one or more non-limiting examples, instances, or illustrations. While various features, elements or steps of particular embodiments can be disclosed using the transitional phrase "comprising," it is to be understood that alternative embodiments, including those that can be described using the transitional phrases "consisting of" or "consisting essentially of," are implied. Thus, for example, implied alternative embodiments to an apparatus that comprises A+B+C include embodiments where an apparatus consists of A+B+C and embodiments where an apparatus consists essentially of A+B+C.

While the present method, apparatus, and/or system has been described with reference to certain implementations, it will be understood by those skilled in the art that various changes may be made, and equivalents may be substituted without departing from the scope of the present disclosure. In addition, many modifications may be made to adapt a particular situation or material to the teachings of the present disclosure without departing from its scope. For example, systems, blocks, and/or other components of disclosed examples may be combined, divided, re-arranged, and/or otherwise modified. Therefore, the present method and/or system are not limited to the particular implementations disclosed. Instead, the present method and/or system will include all implementations falling within the scope of the appended claims, both literally and under the doctrine of equivalents.

Certain embodiments of the invention are described in the following clauses :
Clause 1. A welding torch diffuser comprising:
   a first section configured to couple to a welding torch neck;
   a second section configured to receive a contact tip;
   a first interior surface extending from an end of the first section toward the second section, wherein the first interior surface defines a first cavity configured to receive the welding torch neck; and
   a lateral aperture extension extending at least partially into the first cavity, wherein:
      the lateral aperture extension defines an aperture between the first section and the second section, and
      the lateral aperture extension defines an interior aperture cavity configured to capture a welding wire liner positioned within the welding torch neck and align the welding wire liner with the aperture.
Clause 2. The welding torch diffuser of clause 1, wherein the first interior surface and the lateral aperture extension define a neck flange portion of the first cavity, the neck flange portion being configured to receive a flange portion of the welding torch neck when the welding torch diffuser is coupled to the welding torch neck.
Clause 3. The welding torch diffuser of clause 2, wherein the first interior surface comprises a tapered portion configured to guide or engage at least some of the flange portion of the welding torch neck, the tapered portion at least partially defining the neck flange portion of the first cavity.
Clause 4. The welding torch diffuser of clause 1, further comprising an inwardly extending interior surface, wherein:
   the first interior surface extends between the first end of the first section and the inwardly extending interior surface; and
   the lateral aperture extension extends into the first cavity from the inwardly extending interior surface.
Clause 5. The welding torch diffuser of clause 4, wherein the lateral aperture extension extends at least 3 mm from the inwardly extending interior surface.
Clause 6. The welding torch diffuser of clause 1, further comprising a plurality of gas ports configured to direct gas from an interior of the welding torch neck to an exterior of the welding torch diffuser, wherein each gas port of the plurality of gas ports comprises a port opening defined by an exterior surface of the second section.
Clause 7. The welding torch diffuser of clause 1, wherein the first interior surface comprises a threaded portion configured to couple the welding torch diffuser to the welding torch neck.
Clause 8. The welding torch diffuser of clause 1, wherein the second section comprises a second interior surface defining a second cavity configured to receive the contact tip.
Clause 9. The welding torch diffuser of clause 8, wherein the second interior surface comprises a threaded portion.
Clause 10. The welding torch diffuser of clause 1, wherein the first section and the second section are integrally formed.
Clause 11. A welding system comprising:
   a welding torch comprising a welding torch neck, an end of the welding torch neck defining a neck opening, the welding torch configured to conduct weld current from a welding cable to the welding torch neck;
   a welding wire liner configured to be inserted through the welding cable via the neck opening; and
   a welding torch diffuser, comprising:
      a first section configured to couple to the welding torch neck;
      a second section configured to receive a contact tip;
      a first interior surface extending from an end of the first section toward the second section, wherein the first interior surface defines a first cavity configured to receive the welding torch neck; and
      a lateral aperture extension extending at least partially into the first cavity, wherein:
         the lateral aperture extension defines an aperture between the first section and the second section, and
         the lateral aperture extension defines an interior aperture cavity configured to capture the welding wire liner and align the welding wire liner with the aperture.
Clause 12. The welding system of clause 11, wherein the first interior surface and the lateral aperture extension define a neck flange portion of the first cavity, the neck flange portion being configured to receive a flange portion of the welding torch neck when the welding torch diffuser is coupled to the welding torch neck.
Clause 13. The welding system of clause 12, wherein the first interior surface comprises a tapered portion configured to guide or engage at least some of the flange portion of the welding torch neck, the tapered portion at least partially defining the neck flange portion of the first cavity.
Clause 14. The welding system of clause 11, wherein the welding torch diffuser further comprises an inwardly extending interior surface, wherein:
   the first interior surface extends between the first end of the first section and the inwardly extending interior surface; and
   the lateral aperture extension extends into the first cavity from the inwardly extending interior surface.
Clause 15. The welding system of clause 14, wherein the lateral aperture extension extends at least 3 mm from the inwardly extending interior surface.
Clause 16. The welding system of clause 11, wherein the welding torch diffuser further comprises a plurality of gas ports configured to direct gas from an interior of the welding torch neck to an exterior of the welding torch diffuser, wherein each gas port of the plurality of gas ports comprises a port opening defined by an exterior surface of the second section.
Clause 17. The welding system of clause 11, wherein the first interior surface comprises a threaded portion configured to threadedly engage a threaded portion of an exterior surface of the welding torch neck.
Clause 18. The welding system of clause 11, wherein the second section comprises a second interior surface defining a second cavity configured to receive the contact tip.
Clause 19. The welding system of clause 18, wherein the second interior surface comprises a threaded portion.
Clause 20. The welding system of clause 11, wherein the first section and the second section are integrally formed.
Clause 21. A welding torch diffuser comprising:
   a first section configured to be inserted into an interior of a welding torch neck and coupled to the welding torch neck;
   a second section configured to receive a contact tip; and
   a first interior surface extending from an end of the first section toward the second section, wherein:
      the welding torch diffuser defines an aperture between the first section and the second section,
      the second section is configured to align the contact tip with the aperture, and
      the first interior surface defines a first cavity configured to capture a welding wire liner positioned within the welding torch neck as the first section is inserted into the interior of the welding torch neck and align the welding wire liner with the aperture.
Clause 22. The welding torch diffuser of clause 21, wherein the second section comprises a second interior surface defining a second cavity configured to receive the contact tip.
Clause 23. The welding torch diffuser of clause 22, wherein the second interior surface comprises a threaded portion.
Clause 24. The welding torch diffuser of clause 21, further comprising a plurality of gas ports configured to direct gas from an interior of the welding torch neck to an exterior of the welding torch diffuser, wherein each gas port of the plurality of gas ports comprises a first port opening defined by an exterior surface of the second section.
Clause 25. The welding torch diffuser of clause 24, wherein each gas port of the plurality of gas ports further comprises a second port opening defined by the first interior surface and a longitudinal channel defined by the welding torch diffuser extending from the second port opening to the first port opening.
Clause 26. The welding torch diffuser of clause 21, further comprising an internal collar positioned between the first section and the second section, wherein the internal collar defines the aperture.
Clause 27. The welding torch diffuser of clause 21, wherein the first section and the second section are integrally formed.
Clause 28. The welding torch diffuser of clause 21, wherein the first section comprises a threaded exterior surface configured to couple the welding torch diffuser to the welding torch neck.
Clause 29. The welding torch diffuser of clause 21, further comprising an exterior torch stop, wherein:
   the first section comprises an exterior surface extending to the exterior torch stop;
   the exterior surface defines a first outside radius; and
   the exterior torch stop defines a second outside radius greater than the first outside radius.
Clause 30. The welding torch diffuser of clause 29, wherein the welding torch diffuser defines the aperture at an aperture position less than or equal to 100 mm from a torch stop end of the exterior torch stop along a length of the welding torch diffuser.
Clause 31. A welding system comprising:
   a welding torch comprising a welding torch neck, an end of the welding torch neck defining a neck opening, the welding torch configured to conduct weld current from a welding cable to the welding torch neck;
   a welding wire liner configured to be inserted through the welding cable via the neck opening; and
   a welding torch diffuser, comprising:
      a first section configured to be inserted into an interior of the welding torch neck and coupled to the welding torch neck;
      a second section configured to receive a contact tip; and
      a first interior surface extending from an end of the first section toward the second section, wherein:
         the welding torch diffuser defines an aperture between the first section and the second section,
         the second section is configured to align the contact tip with the aperture, and
         the first interior surface defines a first cavity configured to, when an end of the welding wire liner is substantially flush with the end of the welding torch neck, capture the welding wire liner positioned within the welding torch neck as the first section is inserted into the interior of the welding torch neck and align the welding wire liner with the aperture.
Clause 32. The welding system of clause 31, wherein the second section of the welding torch diffuser comprises a second interior surface defining a second cavity configured to receive the contact tip.
Clause 33. The welding system of clause 32, wherein the second interior surface of the welding torch diffuser comprises a threaded portion, and the contact tip comprises a threaded exterior contact tip surface configured to threadedly engage with the threaded portion of the second interior surface of the welding torch diffuser.
Clause 34. The welding system of clause 31, wherein the welding torch diffuser further comprises a plurality of gas ports configured to direct gas from an interior of the welding torch neck to an exterior of the welding torch diffuser, wherein each gas port of the plurality of gas ports comprises a first port opening defined by an exterior surface of the second section.
Clause 35. The welding system of clause 34, wherein each gas port of the plurality of gas ports further comprises a second port opening defined by the first interior surface of the welding torch diffuser and a longitudinal channel defined by the welding torch diffuser extending from the second port opening to the first port opening.
Clause 36. The welding system of clause 31, wherein the welding torch diffuser further comprises an internal collar positioned between the first section and the second section of the welding torch diffuser, wherein the internal collar defines the aperture of the welding torch diffuser.
Clause 37. The welding system of clause 31, wherein the first section of the welding torch diffuser and the second section of the welding torch diffuser are integrally formed.
Clause 38. The welding system of clause 31, wherein:
   the welding torch diffuser further comprises a threaded exterior surface configured to couple the welding torch diffuser to the welding torch neck; and
   the welding torch neck further comprises a threaded interior surface configured to threadedly engage the threaded exterior surface of the welding torch diffuser.
Clause 39. The welding system of clause 31, wherein:
   the welding torch diffuser further comprises an exterior torch stop;
   the first section of the welding torch diffuser comprises an exterior surface extending to the exterior torch stop;
   the exterior surface of the first section defines a first outside radius; and the exterior torch stop defines a second outside radius greater than the first outside radius.
Clause 40. The welding system of clause 39, wherein the welding torch diffuser defines the aperture at an aperture position less than or equal to 100 mm from a torch stop end of the exterior torch stop along a length of the welding torch diffuser.

## Claims

1. A welding torch diffuser comprising:
a first section configured to couple to a welding torch neck;
a second section configured to receive a contact tip;
a first interior surface extending from an end of the first section toward the second section, wherein the first interior surface defines a first cavity configured to receive the welding torch neck; and
a lateral aperture extension extending at least partially into the first cavity, wherein:
the lateral aperture extension defines an aperture between the first section and the second section, and
the lateral aperture extension defines an interior aperture cavity configured to capture a welding wire liner positioned within the welding torch neck and align the welding wire liner with the aperture.

2. The welding torch diffuser of claim 1, wherein the first interior surface and the lateral aperture extension define a neck flange portion of the first cavity, the neck flange portion being configured to receive a flange portion of the welding torch neck when the welding torch diffuser is coupled to the welding torch neck.

3. The welding torch diffuser of claim 2, wherein the first interior surface comprises a tapered portion configured to guide or engage at least some of the flange portion of the welding torch neck, the tapered portion at least partially defining the neck flange portion of the first cavity.

4. The welding torch diffuser of claim 1, further comprising an inwardly extending interior surface, wherein:
the first interior surface extends between the first end of the first section and the inwardly extending interior surface; and
the lateral aperture extension extends into the first cavity from the inwardly extending interior surface, and optionally wherein the lateral aperture extension extends at least 3 mm from the inwardly extending interior surface.

5. The welding torch diffuser of claim 1, further comprising a plurality of gas ports configured to direct gas from an interior of the welding torch neck to an exterior of the welding torch diffuser, wherein each gas port of the plurality of gas ports comprises a port opening defined by an exterior surface of the second section.

6. The welding torch diffuser of claim 1, wherein the first interior surface comprises a threaded portion configured to couple the welding torch diffuser to the welding torch neck.

7. The welding torch diffuser of claim 1, wherein the second section comprises a second interior surface defining a second cavity configured to receive the contact tip, and optionally wherein the second interior surface comprises a threaded portion.

8. The welding torch diffuser of claim 1, wherein the first section and the second section are integrally formed.

9. A welding system comprising:
a welding torch comprising a welding torch neck, an end of the welding torch neck defining a neck opening, the welding torch configured to conduct weld current from a welding cable to the welding torch neck;
a welding wire liner configured to be inserted through the welding cable via the neck opening; and
a welding torch diffuser, comprising:
a first section configured to couple to the welding torch neck;
a second section configured to receive a contact tip;
a first interior surface extending from an end of the first section toward the second section, wherein the first interior surface defines a first cavity configured to receive the welding torch neck; and
a lateral aperture extension extending at least partially into the first cavity, wherein:
the lateral aperture extension defines an aperture between the first section and the second section, and
the lateral aperture extension defines an interior aperture cavity configured to capture the welding wire liner and align the welding wire liner with the aperture.

10. The welding system of claim 9, wherein the first interior surface and the lateral aperture extension define a neck flange portion of the first cavity, the neck flange portion being configured to receive a flange portion of the welding torch neck when the welding torch diffuser is coupled to the welding torch neck, and optionally wherein the first interior surface comprises a tapered portion configured to guide or engage at least some of the flange portion of the welding torch neck, the tapered portion at least partially defining the neck flange portion of the first cavity.

11. The welding system of claim 9, wherein the welding torch diffuser further comprises an inwardly extending interior surface, wherein:
the first interior surface extends between the first end of the first section and the inwardly extending interior surface; and
the lateral aperture extension extends into the first cavity from the inwardly extending interior surface, and optionally wherein the lateral aperture extension extends at least 3 mm from the inwardly extending interior surface.

12. The welding system of claim 9, wherein the welding torch diffuser further comprises a plurality of gas ports configured to direct gas from an interior of the welding torch neck to an exterior of the welding torch diffuser, wherein each gas port of the plurality of gas ports comprises a port opening defined by an exterior surface of the second section.

13. The welding system of claim 9, wherein the first interior surface comprises a threaded portion configured to threadedly engage a threaded portion of an exterior surface of the welding torch neck.

14. The welding system of claim 9, wherein the second section comprises a second interior surface defining a second cavity configured to receive the contact tip, and optionally wherein the second interior surface comprises a threaded portion.

15. The welding system of claim 9, wherein the first section and the second section are integrally formed.
